# EUROPEAN PATENT APPLICATION

(11) **EP 4 703 403 A1**
(43) Date of publication of application: **04.03.2026**
(21) Application number: 24796822.5
(22) Date of filing: 11.04.2024
(51) Int. Cl.: C08G 61/06

(54) **CATALYST LIQUID AND METHOD FOR PRODUCING CATALYST LIQUID**

(30) Priority: 25.04.2023 JP 2023071382
(71) Applicant: RIMTEC Corporation, Tokyo 100-0005 (JP)
(72) Inventor: IIDA, Yuusuke, Tokyo 100-0005 (JP)
(74) Representative: Kraus & Lederer PartGmbB
(86) International application number: PCT/JP2024/014725
(87) International publication number: WO 2024/225066

(57) **Abstract**

Provided is a catalyst solution comprising a metal-oxo complex represented by the general formula (1) below and at least one of MoOCl₄ and WOCl₄, wherein the total content of MoOCl₄ and WOCl₄ is 0.5 to 20 parts by weight with respect to 100 parts by weight of the metal-oxo complex: 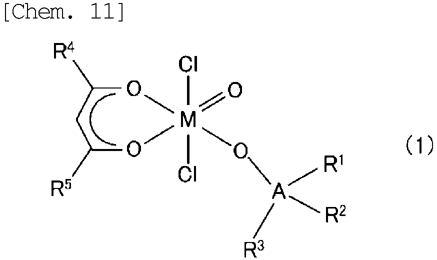 wherein in the above general formula (1), "M" represents a molybdenum atom or a tungsten atom; "A" represents a carbon atom, a silicon atom, a germanium atom, a tin atom or a lead atom; R¹ to R⁵ each independently represent a hydrogen atom, a straight or branched chain alkyl group that is substituted or unsubstituted and has 1 to 20 carbon atoms, or a substituted or unsubstituted aryl group having 6 to 20 carbon atoms; and R¹ to R³ may be bonded to one another to form a ring.

## Description

### TECHNICAL FIELD

The present invention relates to a catalyst solution and a method for producing the catalyst solution. More particularly, the present invention relates to a catalyst solution that gives a polymerizable composition having excellent mold releasability and filling properties, and a method for producing such a catalyst solution.

### BACKGROUND ART

Transition metal carbene complexes such as ruthenium carbene complexes that are referred to as Grubbs catalyst and molybdenum carbene complexes and tungsten carbene complexes that are referred to as Schrock catalyst are known as highly active catalysts for metathesis reactions (hereinafter also referred to as "metathesis catalyst") and widely used.

Among the transition metal carbene complexes, molybdenum carbene complexes and tungsten carbene complexes have extremely high activity as a metathesis catalyst and can make metathesis reactions proceed stereospecifically by appropriately selecting a substituent or a ligand of a metal, for example, as disclosed in Patent Document 1. Therefore, various studies have been conducted on molybdenum carbene complexes and tungsten carbene complexes.

For example, Patent Document 1 discloses a metal-oxo complex produced by coordinating a group represented by -OA(R¹R²R³) ("A" represents a carbon atom, a silicon atom, a germanium atom, a tin atom, or a lead atom; R¹ to R³ each independently represent a hydrogen atom, a straight or branched chain alkyl group that is substituted or unsubstituted and has 1 to 20 carbon atoms, or a substituted or unsubstituted aryl group having 6 to 20 carbon atoms; and R¹ to R³ may be bonded to one another to form a ring) and β-diketone to a molybdenum atom or a tungsten atom. In the techniques of Patent Document 1, in the production of the metal-oxo complex, the metal-oxo complex is isolated through a recrystallization step, and the isolated metal-oxo complex is dissolved in a solvent to give a catalyst solution.

### RELATED ART DOCUMENT

### PATENT DOCUMENT

Patent document 1: WO 2020/085306

### SUMMARY OF THE INVENTION

### PROBLEM TO BE SOLVED BY THE INVENTION

However, a polymerizable composition produced by the techniques of Patent Document 1 described above has insufficient mold releasability. Thus, improvements are desired from the viewpoint of productivity.

The present invention has been made in consideration of such circumstances, and an object of the present invention is to provide a catalyst solution that gives a polymerizable composition having excellent mold releasability and filling properties.

### MEANS FOR SOLVING THE PROBLEMS

The present inventor has conducted studies to achieve the above object, and has found that the above object can be achieved by a catalyst solution comprising a metal-oxo complex produced by coordinating a group represented by -OA(R¹R²R³) ("A" represents a carbon atom, a silicon atom, a germanium atom, a tin atom, or a lead atom; R¹ to R³ each independently represent a hydrogen atom, a straight or branched chain alkyl group that is substituted or unsubstituted and has 1 to 20 carbon atoms, or a substituted or unsubstituted aryl group having 6 to 20 carbon atoms; and R¹ to R³ may be bonded to one another to form a ring) and β-diketone, and MoOCl₄ and/or WOCl₄ in a specific amount with respect to the metal-oxo complex.

That is, the present invention provides the following:
[1] A catalyst solution comprising a metal-oxo complex represented by the general formula (1) below and at least one of MoOCl₄ and WOCl₄, wherein the total content of MoOCl₄ and WOCl₄ is 0.5 to 20 parts by weight with respect to 100 parts by weight of the metal-oxo complex: 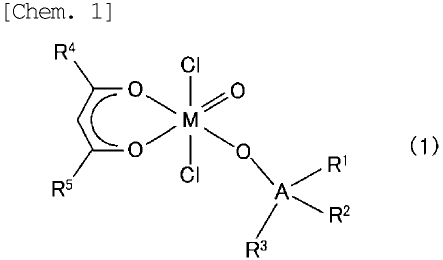 [wherein in the above general formula (1), "M" represents a molybdenum atom or a tungsten atom; "A" represents a carbon atom, a silicon atom, a germanium atom, a tin atom or a lead atom; R¹ to R⁵ each independently represent a hydrogen atom, a straight or branched chain alkyl group that is substituted or unsubstituted and has 1 to 20 carbon atoms, or a substituted or unsubstituted aryl group having 6 to 20 carbon atoms; and R¹ to R³ may be bonded to one another to form a ring].
[2] The catalyst solution according to [1], further comprising a norbornene-based monomer.
[3] The catalyst solution according to [1] or [2], wherein in the general formula (1) above, "A" is a carbon atom or a silicon atom.
[4] The catalyst solution according to any one of [1] to [3], wherein in the general formula (1) above, at least one of R⁴ and R⁵ is a methyl group or a t-butyl group.
[5] The catalyst solution according to any one of [1] to [4], wherein in the general formula (1) above, R¹ and R² are each a straight or branched chain alkyl group that is substituted or unsubstituted and has 1 to 20 carbon atoms, and are bonded to one another to form a ring.
[6] A method for producing the catalyst solution according to any one of [1] to [5], the method comprising:
   a first step of reacting at least one of MoCl₆ and WCl₆ with a ketone compound in an aliphatic solvent to give a solution containing at least one of MoOCl₄ and WOCl₄,
   a second step of reacting the solution containing at least one of MoOCl₄ and WOCl₄ obtained in the first step with a compound represented by the general formula (2) below to give a solution containing a compound represented by the general formula (3) below, and
   a third step of reacting the solution containing the compound represented by the general formula (3) obtained in the second step with a compound represented by the general formula (4) below to give a catalyst solution comprising the metal-oxo complex represented by the general formula (1) above and at least one of MoOCl₄ and WOCl₄: 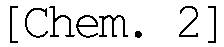 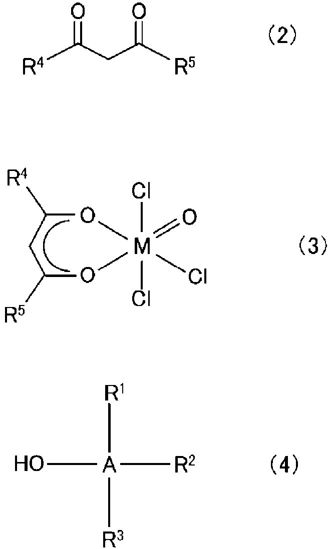 [wherein in the general formulae (2) to (4), "A" represents a carbon atom, a silicon atom, a germanium atom, a tin atom or a lead atom; R¹ to R⁵ each independently represent a hydrogen atom, a straight or branched chain alkyl group that is substituted or unsubstituted and has 1 to 20 carbon atoms, or a substituted or unsubstituted aryl group having 6 to 20 carbon atoms; and R¹ to R³ may be bonded to one another to form a ring].

### EFFECTS OF THE INVENTION

The present invention provides a catalyst solution that gives a polymerizable composition having excellent mold releasability and filling properties, and a production method for obtaining such a catalyst solution.

### BRIEF DESCRIPTION OF DRAWING

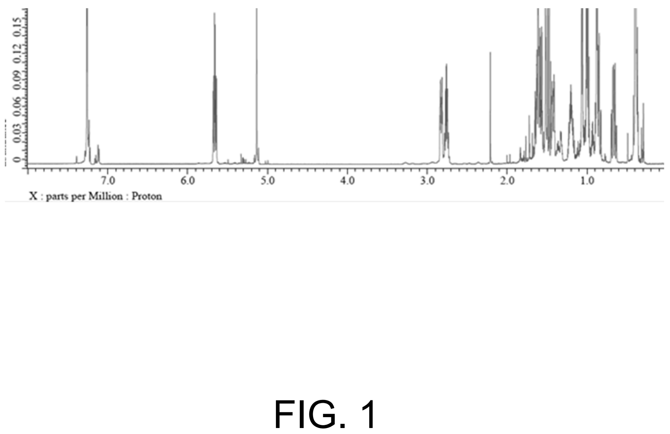

Fig. 1 is a chart showing the result of the NMR analysis in Example 1.

### DESCRIPTION OF EMBODIMENTS

### <Catalyst solution>

The catalyst solution according to the present invention comprises a metal-oxo complex represented by the general formula (1) below, and MoOCl₄ and/or WOCl₄:

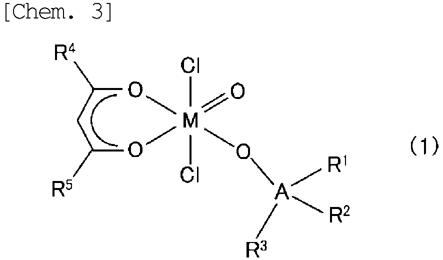

In the general formula (1) above, "M" represents a molybdenum atom or a tungsten atom; "A" represents a carbon atom, a silicon atom, a germanium atom, a tin atom or a lead atom; R¹ to R⁵ each independently represent a hydrogen atom, a straight or branched chain alkyl group that is substituted or unsubstituted and has 1 to 20 carbon atoms, or a substituted or unsubstituted aryl group having 6 to 20 carbon atoms; and R¹ to R³ may be bonded to one another to form a ring.

In the general formula (1) above, "M" represents a molybdenum atom or a tungsten atom that is a central metal of the complex. The central metal of the metal-oxo complex used in the present invention may be a molybdenum atom or a tungsten atom, but a tungsten atom is preferred from the viewpoint of superior catalytic activity.

Furthermore, the compound represented by the above general formula (1) has a group represented by -OA(R¹R²R³) as a ligand. The metal-oxo complex used in the present invention has a structure in which the group represented by -OA(R¹R²R³) and β-diketone are coordinated, thereby the metal-oxo complex is supposed to exhibit excellent stability in the air. Therefore, the metal-oxo complex used in the present invention is excellent in handleability.

In the above general formula (1), "A" represents a carbon atom, a silicon atom, a germanium atom, a tin atom, or a lead atom, is preferably a carbon atom or a silicon atom, and is more preferably a carbon atom from the viewpoint of further enhancing the stability in the air of the metal-oxo complex.

R¹ to R³ in the group represented by -OA(R¹R²R³) each independently represent a hydrogen atom, a straight or branched chain alkyl group that is substituted or unsubstituted and has 1 to 20 carbon atoms, or a substituted or unsubstituted aryl group having 6 to 20 carbon atoms. Furthermore, R¹ to R³ may be bonded to one another to form a ring. Specific examples of the straight or branched chain alkyl group that is substituted or unsubstituted and has 1 to 20 carbon atoms include, but are not particularly limited to, a methyl group, an ethyl group, an isopropyl group, a t-butyl group, an n-butyl group, a 2,2-dimethylpropyl group, a 2-methyl-2-phenylethyl group, and the like. Specific examples of the substituted or unsubstituted aryl group having 6 to 20 carbon atoms include, but are not particularly limited to, a phenyl group, a 4-methylphenyl group, a 2,6-dimethylphenyl group, a 2,6-diisopropylphenyl group, a mesityl group, and the like. The groups represented by R¹ to R³ may be the same or different from each other.

Furthermore, R¹ to R³ may be bonded to one another to form a ring. In this case, specific examples of the group represented by - A(R¹R²R³) in the group represented by -OA(R¹R²R³) (where "A" is a carbon atom) include a cyclopropyl group, a cyclobutyl group, a cyclopentyl group, a cyclohexyl group, a cycloheptyl group, a cyclooctyl group, a cyclononyl group, a cyclodecyl group, a cycloundecyl group, a cyclododecyl group, a norbornyl group, a bornyl group, an isobornyl group, a decahydronaphthyl group, a tricyclodecanyl group, an adamantyl group, and the like. These groups may have a substituent, and among them, preferred is a cyclohexyl group having a substituent. Examples of the substituent include a methyl group, an ethyl group, an isopropyl group, a t-butyl group, an n-butyl group, a 2,2-dimethylpropyl group, a phenyl group, and the like. Among these, preferred are a methyl group and an isopropyl group.

In the compound represented by the general formula (1) above, R⁴ and R⁵ are groups bonded to a β-diketone structure as a ligand, and R⁴ and R⁵ each independently represent a hydrogen atom, a straight or branched chain alkyl group that is substituted or unsubstituted and has 1 to 20 carbon atoms, or a substituted or unsubstituted aryl group having 6 to 20 carbon atoms. Specific examples of the straight or branched chain alkyl group that is substituted or unsubstituted and has 1 to 20 carbon atoms include, but are not particularly limited to, a methyl group, an ethyl group, an isopropyl group, a t-butyl group, an n-butyl group, a 2,2-dimethylpropyl group, a 2-methyl-2-phenylethyl group, and the like. Specific examples of the substituted or unsubstituted aryl group having 6 to 20 carbon atoms include, but are not particularly limited to, a phenyl group, a 4-methylphenyl group, a 2,6-dimethylphenyl group, a 2,6-diisopropylphenyl group, a mesityl group, and the like. The groups represented by R⁴ and R⁵ may be the same or different from each other.

In the metal-oxo complex used in the present invention, at least one of R⁴ and R⁵ is preferably a methyl group or a t-butyl group from the view point of further enhancing solubility in a monomer used for obtaining a polymer. In particular, it is still more preferred that both R⁴ and R⁵ be methyl groups, or both R⁴ and R⁵ be t-butyl groups, from the viewpoint of still further enhancing solubility in a monomer used for obtaining a polymer.

In the metal-oxo complex according to the present invention, among the compounds represented by the general formula (1) above, preferred are compounds represented by the following formulae (5) to (15), more preferred are compounds represented by the following formulae (5), (7), (8), (9), (10), (11), (14), and (15), still more preferred are compounds represented by the following formulae (14) and (15), and even more preferred is a compound represented by the following formula (15).

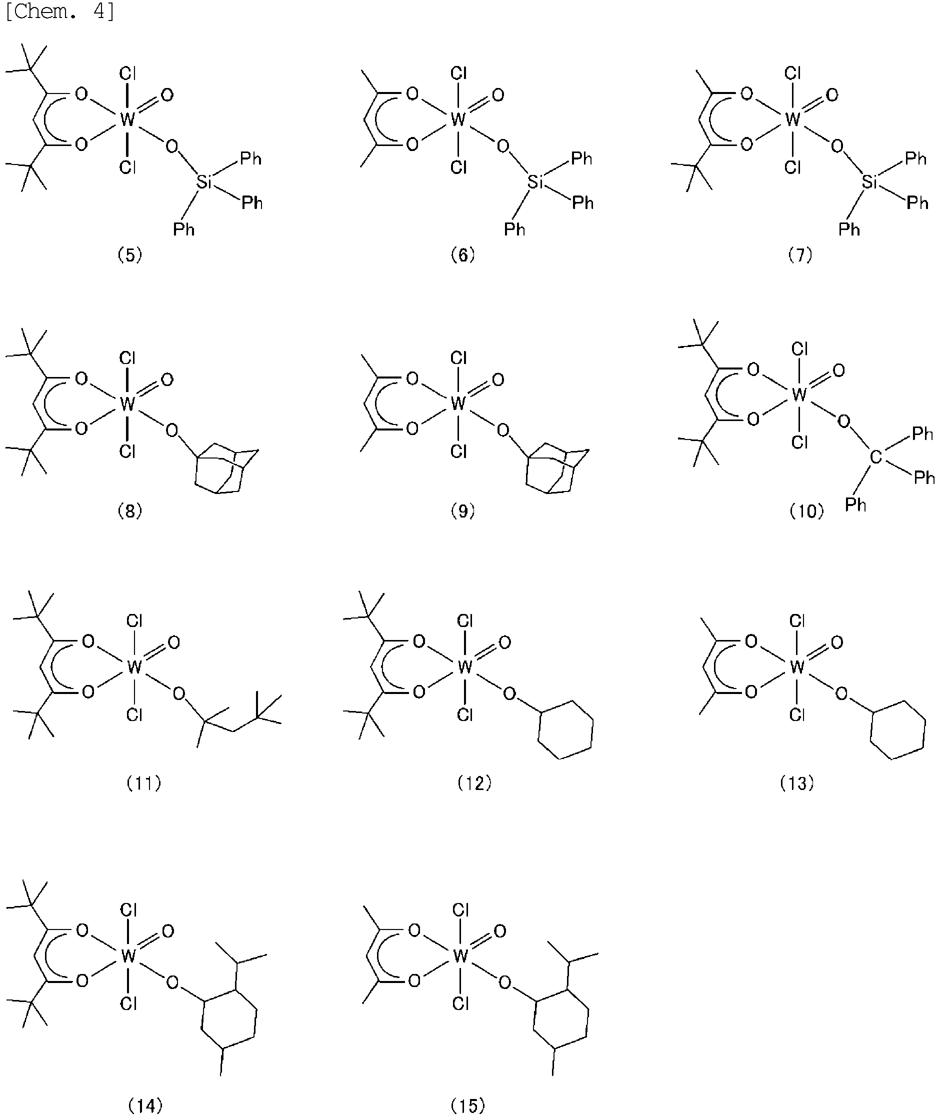

The catalyst solution according to the present invention comprises MoOCl₄ and/or WOCl₄ in addition to the metal-oxo complex represented by the general formula (1) above. The content of MoOCl₄ and/or WOCl₄ in the catalyst solution according to the present invention is 0.5 to 20 parts by weight, preferably 1 to 15 parts by weight, more preferably 2.5 to 12 parts by weight as a total content of MoOCl₄ and WOCl₄ with respect to 100 parts by weight of the metal-oxo complex represented by the general formula (1) above.

According to the present invention, MoOCl₄ and/or WOCl₄ is added in a specific amount with respect to the metal-oxo complex represented by the general formula (1) above as described above to form a catalyst solution. Consequently, when the catalyst solution is included in a polymerizable composition, the polymerizable composition can have excellent mold releasability and filling properties in addition to excellent stability in the air derived from the metal-oxo complex represented by the general formula (1) above. When the total content of MoOCl₄ and WOCl₄ is too small, the mold releasability is insufficient. When the total content of MoOCl₄ and WOCl₄ is too large, the catalytic activity is compromised.

The catalyst solution according to the present invention may contain one of MoOCl₄ and WOCl₄, or may contain both MoOCl₄ and WOCl₄. When the M atom of the metal-oxo complex represented by the general formula (1) above is a molybdenum atom, the catalyst solution preferably contains MoOCl₄. Whereas, when the M atom of the metal-oxo complex represented by the general formula (1) above is a tungsten atom, the catalyst solution preferably contains WOCl₄.

The method for allowing MoOCl₄ and/or WOCl₄ to be present in a specific amount with respect to the metal-oxo complex represented by the general formula (1) above as described above is not particularly limited, but the following method (A) and method (B) can be used. Method (A) : a method of isolating the metal-oxo complex represented by the general formula (1) above obtained by synthesis, and mixing the isolated metal-oxo complex represented by the general formula (1) above with MoOCl₄ and/or WOCl₄. Method (B) : as in a method for producing the catalyst solution according to the present invention as described below, when the metal-oxo complex represented by the general formula (1) above is synthesized, MoOCl₄ and/or WOCl₄ produced in the course of synthesis is allowed to remain in the reaction system, so that the metal-oxo complex represented by the general formula (1) above and MoOCl₄ and/or WOCl₄ is included.

### <Method for producing catalyst solution>

Hereinafter, a method for producing the catalyst solution according to the present invention will be described as the above-described Method (B) .

The method for producing the catalyst solution according to the present invention comprises:
a first step of reacting MoCl₆ and/or WCl₆ with a ketone compound in an aliphatic solvent to give a solution containing MoOCl₄ and/or WOCl₄,
a second step of reacting the solution containing MoOCl₄ and/or WOCl₄ obtained in the first step with a compound represented by the general formula (2) below to give a solution containing a compound represented by the general formula (3) below, and
a third step of reacting the solution containing the compound represented by the general formula (3) obtained in the second step with a compound represented by the general formula (4) below to give a catalyst solution comprising the metal-oxo complex represented by the general formula (1) above and MoOCl₄ and/or WOCl₄:

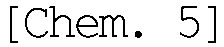

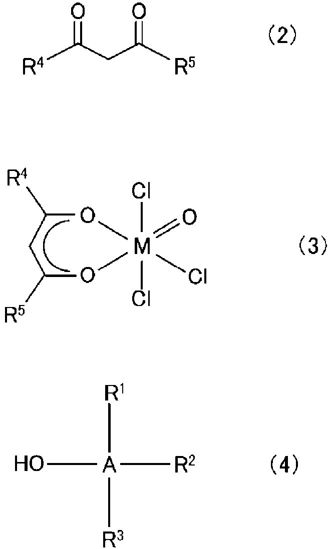

### (First step)

First, in the first step, MoCl₆ and/or WCl₆ are reacted with a ketone compound (monoketone compound) in an aliphatic solvent to give a solution containing MoOCl₄ and/or WOCl₄.

The aliphatic solvent is not particularly limited as long as it does not inhibit the reaction, and examples thereof include straight or branched chain aliphatic hydrocarbons such as propane, n-butane, isobutane, n-pentane, isopentane, n-hexane, propene, 1-butene, isobutene, trans-2-butene, cis-2-butene, 1-pentene, 2-pentene, 1-hexene, 2-hexene, and n-heptane; alicyclic hydrocarbons such as cyclopentane and cyclohexane; ether compounds such as tetrahydrofuran and diethyl ether; and the like. Among these, preferred are straight or branched chain aliphatic hydrocarbons, and more preferred is n-hexane.

The ketone compound (monoketone compound) is not particularly limited, and examples thereof include acetone, methyl ethyl ketone, diethyl ketone, diisopropyl ketone, methyl isobutyl ketone, methyl hexyl ketone, diisobutyl ketone, butyraldehyde, propyl acetate, butyl acetate, amyl acetate, and the like. Among these, preferred is acetone.

In the first step, examples of methods for reacting MoCl₆ and/or WCl₆ with a ketone compound include a method of mixing these compounds in an aliphatic solvent. The reaction temperature is not particularly limited, but is preferably 0 to 100°C, more preferably 25 to 65°C. The reaction time is not particularly limited, but is preferably 1 to 48 hours, more preferably 2 to 24 hours. The reaction atmosphere is preferably an inert gas atmosphere.

The amount of MoCl₆ and/or WCl₆ and the amount of the ketone compound used in the first step are not particularly limited, but the ratio is preferably 1:1 to 1:1.05, more preferably 1:1 to 1:1.03, still more preferably 1:1 to 1:1.01 as "the total amount of MoCl₆ and WCl₆ in mole:the amount of ketone compound in mole".

### (Second step)

In the second step, the solution containing MoOCl₄ and/or WOCl₄ obtained in the first step above is subjected to a reaction with a compound represented by the general formula (2) below to give a solution containing a compound represented by the general formula (3) below:

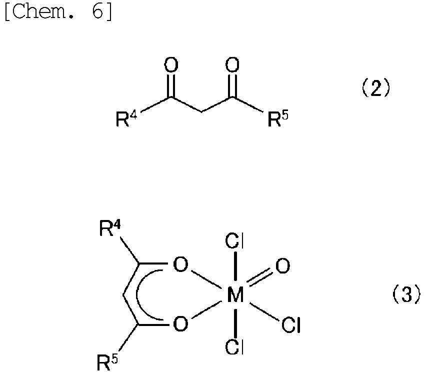

In the general formula (2) and (3) above, R⁴ and R⁵ each independently represent a hydrogen atom, a straight or branched chain alkyl group that is substituted or unsubstituted and has 1 to 20 carbon atoms, or a substituted or unsubstituted aryl group having 6 to 20 carbon atoms, and specific examples thereof are the same as those in the general formula (1) above.

In the second step, the method for subjecting the solution containing MoOCl₄ and/or WOCl₄ obtained in the first step to a reaction with the compound represented by the general formula (2) above is not particularly limited, but examples thereof include a method of adding the compound represented by the general formula (2) above to the solution containing MoOCl₄ and/or WOCl₄ obtained in the first step above, and mixing them. The reaction temperature is not particularly limited, but is preferably 0 to 100°C, more preferably 25 to 65°C. The reaction time is not particularly limited, but is preferably 1 to 48 hours, more preferably 2 to 24 hours. The reaction atmosphere is preferably an inert gas atmosphere.

In the second step, MoOCl₄ and/or WOCl₄ is reacted with the compound represented by the general formula (2) above. It is to be noted that in the production method according to the present invention, in the MoOCl₄ and/or WOCl₄ used in the second step, the amount of MoOCl₄ and/or WOCl₄ that remains unreacted after the reaction with the compound represented by the general formula (2) above corresponds to the amount of MoOCl₄ and/or WOCl₄ in the catalyst solution that is finally obtained.

Thus, in the second step, the amount of the compound represented by the general formula (2) above that is added to a certain amount of MoOCl₄ and/or WOCl₄ can be determined by taking into account the reaction ratio between MoOCl₄ and/or WOCl₄ and the compound represented by the general formula (2) above such that a desired amount of MoOCl₄ and/or WOCl₄ is present in the catalyst solution that is finally obtained. The ratio as "the amount of MoOCl₄ and/or WOCl₄ contained in the solution containing MoOCl₄ and/or WOCl₄ obtained in the first step above in mole:the amount of the compound represented by the general formula (2) above in mole" are preferably 1:1 to 1:1.05, more preferably 1:1 to 1:1.03, still more preferably 1:1 to 1:1.01.

### (Third step)

In the third step, the solution containing the compound represented by the general formula (3) obtained in the second step above is subjected to a reaction with a compound represented by the general formula (4) below to give a catalyst solution comprising the metal-oxo complex represented by the general formula (1) above and MoOCl₄ and/or WOCl₄:

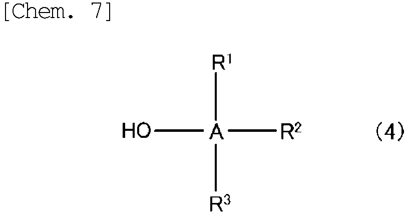

In the general formula (4) above, "A" represents a carbon atom, a silicon atom, a germanium atom, a tin atom, or a lead atom; R¹ to R³ each independently represent a hydrogen atom, a straight or branched chain alkyl group that is substituted or unsubstituted and has 1 to 20 carbon atoms, or a substituted or unsubstituted aryl group having 6 to 20 carbon atoms; and R¹ to R³ may be bonded to one another to form a ring. In the general formula (4) above, specific examples of "A" and R¹ to R³ are the same as those in the general formula (1) above.

In the third step, the method for subjecting the solution containing the compound represented by the general formula (3) obtained in the second step above to a reaction with the compound represented by the general formula (4) above is not particularly limited, but examples thereof include a method of adding the compound represented by the general formula (4) above to the solution containing the compound represented by the general formula (3) obtained in the second step above, and mixing them. The reaction temperature is not particularly limited, but is preferably 0 to 100°C, more preferably 25 to 60°C. The reaction time is not particularly limited, but is preferably 1 to 48 hours, more preferably 2 to 24 hours. The reaction atmosphere is preferably an inert gas atmosphere.

The amount of the compound represented by the general formula (4) above used in the third step is not particularly limited, but the ratio is preferably 1:1 to 1:1.05, more preferably 1:1 to 1:1.03, still more preferably 1:1 to 1:1.01 as "the amount of the compound represented by the general formula (3) obtained in the second step above in mole:the amount of the compound represented by the general formula (4) above in mole".

In the production method according to the present invention, a volatile component such as an aliphatic solvent may be optionally distilled off from the solution containing the metal-oxo complex represented by the general formula (1) above and MoOCl₄ and/or WOCl₄ obtained in the third step to give the catalyst solution according to the present invention. Washing with a solvent may be performed, if necessary.

According to the production method according to the present invention, a step of isolating the metal-oxo complex represented by the general formula (1) above by recrystallization and the like is not necessary. Furthermore, in the second step, the amount of MoOCl₄ and/or WOCl₄ in the catalyst solution that is finally obtained can be suitably controlled within the above ranges by controlling the amount of the compound represented by the general formula (2) above used for the reaction with MoOCl₄ and/or WOCl₄. Accordingly, a separation step such as recrystallization is not necessary, and a catalyst solution that gives a polymerizable composition having excellent mold releasability and filling properties can be obtained with a high production efficiency.

However, in the present invention, a method other than the methods described above may be used as long as it can produce the catalyst solution according to the present invention. For example, such a method may include the following steps: distilling off a volatile component such as an aliphatic solvent from the solution containing the metal-oxo complex represented by the general formula (1) above and MoOCl₄ and/or WOCl₄ obtained in the third step above, then performing recrystallization to isolate the metal-oxo complex represented by the general formula (1) above, thereafter adding MoOCl₄ and/or WOCl₄ thereto, and mixing them.

### <Use as metathesis catalyst precursor>

The catalyst solution according to the present invention comprises the metal-oxo complex represented by the general formula (1) above, and thus can be suitably used as a metathesis catalyst precursor.

When the catalyst solution according to the present invention is used as a metathesis catalyst precursor, generally, it is brought into contact with an organometallic compound that is generally used in a metathesis polymerization catalyst for activation, and the activated catalyst is used for a metathesis polymerization reaction. Specifically, the catalyst solution according to the present invention can give a metathesis polymerization catalyst by bringing the metal-oxo complex represented by the general formula (1) above contained in the catalyst solution according to the present invention into contact with an organometallic compound to cause a reaction between the metal-oxo complex represented by the general formula (1) above and the organometallic compound. In this case, since the catalyst solution according to the present invention contains a specific amount of MoOCl₄ and/or WOCl₄ as described above, when a polymerizable monomer is further added to the catalyst solution to form a polymerizable composition, the polymerizable composition can have excellent mold releasability and filling properties due to the effects of MoOCl₄ and/or WOCl₄.

As the organometallic compound as the activator, for example, an organometallic compound of a metal of groups 11 to 14 of the periodic table can be used. Specific examples thereof include alkylaluminum compounds such as triethylaluminum, triisobutylaluminum, trimethylaluminum, tributylaluminum, trihexylaluminum, and trioctylaluminum; alkylaluminum halide compounds such as ethylaluminum dichloride, diethylaluminum chloride, diisobutylaluminum chloride, ethylaluminum sesquichloride, isobutylaluminum dichloride, and dioctylaluminum iodide; alkylaluminum alkoxide compounds such as diethylaluminum ethoxide; organotin compounds such as tetrabutyltin; organozinc compounds such as diethylzinc; organomagnesium compounds such as isopropylmagnesium chloride; and the like. Among these, preferred are alkylaluminum compounds and alkylaluminum halide compounds, more preferred are triethylaluminum, trioctylaluminum, diethylaluminum chloride, and dioctylaluminum iodide, and still more preferred are triethylaluminum and diethylaluminum chloride. The organometallic compound as an activator can be used alone or in combination.

When the catalyst solution according to the present invention is used as a metathesis catalyst precursor, a norbornene-based monomer can be suitably used as a polymerizable monomer.

In this case, the catalyst solution according to the present invention before use preferably comprises a norbornene-based monomer. Specifically, the catalyst solution according to the present invention preferably comprises the metal-oxo complex represented by the general formula (1) above, MoOCl₄ and/or WOCl₄, and a norbornene-based monomer. The content of a norbornene-based monomer in the catalyst solution according to the present invention is preferably 100 to 2000 parts by weight, more preferably 400 to 1600 parts by weight, still more preferably 700 to 1200 parts by weight with respect to 100 parts by weight of the metal-oxo complex represented by the general formula (1) above. When the content of a norbornene-based monomer is within the above ranges, the viscosity of the catalyst solution according to the present invention can be controlled within a suitable range to improve handleability and productivity.

The norbornene-based monomer is not particularly limited as long as it is a compound having a norbornene structure. Specific examples thereof include:
dicyclopentadienes such as dicyclopentadiene and methyldicyclopentadiene;
tetracyclododecenes such as tetracyclo[6.2.1.1^{3,6}.0^{2,7}]dodec-4-ene, 9-ethylidene tetracyclo[6.2.1.1^{3,6}.0^{2,7}]dodec-4-ene, 9-phenyltetracyclo[6.2.1.1^{3,6}.0^{2,7}]dodec-4-ene, tetracyclo[6.2.1.1^{3,6}.0^{2,7}]dodec-9-ene-4-carboxylic acid, and tetracyclo[6.2.1.1^{3,6}.0^{2,7}]dodec-9-ene-4,5-dicarboxylic acid anhydride;
norbornenes such as 2-norbornene, 5-ethylidene-2-norbornene, 5-vinyl-2-norbornene, 5-phenyl-2-norbornene, 5-norbornen-2-yl acrylate, 5-norbornen-2-yl methacrylate, 5-norbornene-2-carboxylic acid, 5-norbornene-2,3-dicarboxylic acid, and 5-norbornene-2,3-dicarboxylic acid anhydride;
oxanorbornenes such as 7-oxa-2-norbornene, 5-ethylidene-7-oxa-2-norbornene;
cyclic olefins with four or more rings such as tetracyclo[9.2.1.0^{2,11}.0^{3,8}]tetradeca-3,5,7,12-tetraene (also known as 1,4-methano-1,4,4a,9a-tetrahydro-9H-fluorene), pentacyclo[6.5.1.1^{3,6}.0^{2,7}.0^{9,13}]pentadeca-4,10-diene, pentacyclo[9.2.1.0^{2,10}.0^{3,8}]pentadeca-5,12-diene, and tricyclopentadiene;
and the like.

The metathesis polymerization reaction using the catalyst solution according to the present invention may be performed in a solvent, or performed without solvents. For example, when the catalyst solution according to the present invention comprises the metal-oxo complex represented by the general formula (1) above, MoOCl₄ and/or WOCl₄, and a norbornene-based monomer, a solvent-free polymerization reaction such as bulk polymerization can be performed.

### EXAMPLES

Hereinafter, the present invention will be described by way of Examples, but these Examples should not be construed as limitations. It is to be noted that "parts" and "%" are mass-based unless otherwise specified.

### <Example 1>

### (Preparation of catalyst solution)

To a reaction vessel equipped with a stirrer, 488.79 g of hexane and 140 g (353.05 mmol) of tungsten chloride (VI) (WCl₆) were added under a nitrogen atmosphere, and the mixture was stirred for 1 hour. Next, the temperature of the reaction vessel was adjusted to 55°C. Thereafter, 41.01 g (353.05 mmol) of acetone was added continuously over 27 minutes under a nitrogen atmosphere. After the addition of acetone, the temperature of the reaction vessel was kept at 55°C with stirring for 5 hours. Next, while the temperature of the reaction vessel was kept at 55°C, 70.70 g (353.05 mmol) of acetylacetone was added continuously over 32 minutes under a nitrogen atmosphere. After the addition of acetylacetone, the temperature of the reaction vessel was kept at 55°C with stirring for 18 hours. Next, 110.34 g (353.05 mmol) of L-menthol (2-isopropyl-5-methylcyclohexanol) was added continuously over 36 minutes under a nitrogen atmosphere. After the addition of L-menthol, the temperature of the reaction vessel was kept at 55°C with stirring for 26 hours. Next, the resulting reaction solution was subjected to a distillation procedure to remove volatile components including hexane, giving a viscous yellow-brown substance.

Then, hexane was added to an aliquot of the resulting viscous substance to give a hexane suspension. Next, the hexane suspension was centrifuged by a centrifuge to precipitate insoluble matter, and a yellow-brown solution was recovered as a supernatant. The recovered yellow-brown solution as a supernatant was allowed to stand at room temperature overnight to afford yellow-brown needle crystals. The result of NMR analysis confirmed that the resulting needle crystals were a compound represented by the formula (15). The result of NMR analysis is shown in Fig. 1.

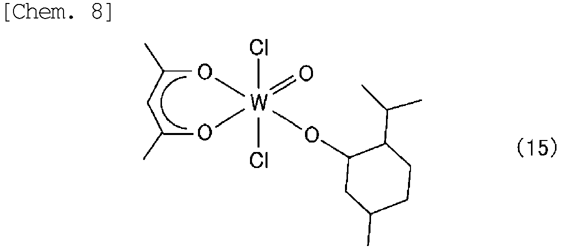

Furthermore, the resulting viscous yellow-brown substance was analyzed by ¹⁸³W-NMR to determine that the content of WOCl₄ in the viscous substance was 8.4 parts with respect to 100 parts of the compound represented by the formula (15).

Next, 99.17 parts of a mixture of norbornene-based monomers (RIM-M) containing 90% of dicyclopentadiene and 10% of tricyclopentadiene was added with respect to 0.83 parts of the compound represented by the formula (15) in the resulting viscous yellow-brown substance to afford a catalyst solution. The resulting catalyst solution was stirred for 10 minutes, and then the viscosity of the catalyst solution was measured using a B-type viscometer, and the viscosity was determined to be 2900 mPa·s.

### (Preparation of activator solution A)

In a reaction vessel, triethylaluminum was added to dipropylene glycol dimethyl ether under a nitrogen atmosphere, and the mixture was mixed. The triethylaluminum was dissolved in a mixture of norbornene-based monomers (RIM-M) containing 90% of dicyclopentadiene and 10% of tricyclopentadiene such that the concentration of triethylaluminum was 0.13%, giving an activator solution A.

### (Preparation of reaction stock solution B)

In a reaction vessel, the catalyst solution obtained above was added to a mixture of norbornene-based monomers (RIM-M) containing 90% of dicyclopentadiene and 10% of tricyclopentadiene under a nitrogen atmosphere such that the amount of tungsten was 3.5 mmol/kg, and the mixture was mixed to give a reaction stock solution B. It is to be noted that in the preparation of the reaction stock solution B, the catalyst solution obtained above was used after storage for 3 days under a nitrogen atmosphere.

### (Production of polymer)

A nitrogen-purged 50-mL vessel was placed under a condition of 30°C. 20 g of the reaction stock solution B prepared above was preliminary purged with nitrogen and the temperature of the reaction stock solution B was controlled to 30°C, then the nitrogen-purged reaction stock solution B at 30°C was introduced into the nitrogen-purged vessel using a glass syringe, and stirred using a stirring device. Next, 0.2 g of the activator solution A prepared above was introduced into the vessel using a glass syringe, and the mixture was mixed for 10 seconds. At this time, as the polymerization reaction proceeded, the state of the mixture changed to a gel state and then white smoke was produced. In this Example, the time from the start of mixing of the activator solution A with the reaction stock solution B to the change to a gel state was called "gelation time", and the time to the production of white smoke was called "curing time". In Example 1, the gelation time was 15 seconds, and the curing time was 70 seconds. The reaction provided a polymer of dicyclopentadiene and tricyclopentadiene. It is to be noted that, for evaluation of mold releasability, the polymerization was performed such that a thin plate-like polymer portion for mold releasability evaluation was formed.

Then, mold releasability and filling properties of the resulting polymer were evaluated according to the following methods. The results are shown in Table 1.

### (Mold releasability)

The hardness of the resulting polymer was measured by measuring the mold release time at the thin plate-like polymer portion for mold releasability evaluation, and the result was evaluated based on the following criteria.
∘: The mold release time in the size of an A4 plate was within 5 seconds.
×: The mold release time in the size of an A4 plate was more than 5 seconds.

### (Filling properties)

The filling properties of the resulting polymer were determined by observing whether or not an unfilled portion was present, and the result was evaluated based on the following criteria.
∘: An A4 plate had no unfilled portion.
×: An A4 plate had an unfilled portion.

### (Example 2)

Hexane was added to an aliquot of the viscous substance obtained in Example 1 to give a hexane suspension. Next, the hexane suspension was centrifuged by a centrifuge to precipitate insoluble matter, and a yellow-brown solution was recovered as a supernatant. The recovered yellow-brown solution as a supernatant was allowed to stand at room temperature overnight to isolate a compound represented by the formula (15) as yellow needle crystals. It is to be noted that the resulting needle crystals were analyzed by ¹⁸³W-NMR, and the results did not show the presence of WOCl₄. Then, 5 parts of the isolated compound represented by the formula (15) and 0.15 parts of WOCl₄ (the amount of WOCl₄ was 3 parts with respect to 100 parts of the compound represented by the formula (15)) were introduced into a glass vial under a nitrogen atmosphere, and then 45 parts of a mixture of norbornene-based monomers (RIM-M) containing 90% of dicyclopentadiene and 10% of tricyclopentadiene was added thereto using a glass syringe with stirring to afford a catalyst solution. The resulting catalyst solution was stirred for 10 minutes, and then the viscosity of the catalyst solution was measured using a B-type viscometer, and the viscosity was determined to be 34.6 mPa·s.

Then, a reaction stock solution B was prepared in the same manner as in Example 1 except that the catalyst solution obtained above was used, and a polymer was obtained using an activator solution A obtained in the same manner as in Example 1. The resulting polymer was evaluated in the same manner as in Example 1. The results are shown in Table 1.

### (Example 3)

In the same manner as in Example 2 using an aliquot of the viscous substance obtained in Example 1, a compound represented by the formula (15) was isolated as yellow needle crystals. It is to be noted that the resulting needle crystals were analyzed by ¹⁸³W-NMR, and the results did not show the presence of WOCl₄. Then, 4.95 parts of the isolated compound represented by the formula (15) and 0.5 parts of WOCl₄ (the amount of WOCl₄ was 10.1 parts with respect to 100 parts of the compound represented by the formula (15)) were introduced into a glass vial under a nitrogen atmosphere, and then 44.55 parts of a mixture of norbornene-based monomers (RIM-M) containing 90% of dicyclopentadiene and 10% of tricyclopentadiene was added thereto using a glass syringe with stirring to afford a catalyst solution. The resulting catalyst solution was stirred for 10 minutes, and then the viscosity of the catalyst solution was measured using a B-type viscometer, and the viscosity was determined to be 3840 mPa·s.

Then, a reaction stock solution B was prepared in the same manner as in Example 1 except that the catalyst solution obtained above was used, and a polymer was obtained using an activator solution A obtained in the same manner as in Example 1. The resulting polymer was evaluated in the same manner as in Example 1. The results are shown in Table 1.

### (Comparative Example 1)

In the same manner as in Example 2 using an aliquot of the viscous substance obtained in Example 1, a compound represented by the formula (15) was isolated as yellow needle crystals. It is to be noted that the resulting needle crystals were analyzed by ¹⁸³W-NMR, and the results did not show the presence of WOCl₄. Then, 2 parts of the isolated compound represented by the formula (15) was introduced into a glass vial under a nitrogen atmosphere, and then 100 parts of a mixture of norbornene-based monomers (RIM-M) containing 90% of dicyclopentadiene and 10% of tricyclopentadiene was added thereto using a glass syringe with stirring to afford a catalyst solution. That is, in Comparative Example 1, WOCl₄ was not contained in the catalyst solution.

Then, a reaction stock solution B was prepared in the same manner as in Example 1 except that the catalyst solution obtained above was used, and a polymer was obtained using an activator solution A obtained in the same manner as in Example 1. The resulting polymer was evaluated in the same manner as in Example 1. The results are shown in Table 1.

### [Table 1]

**Table 1**

| | | | Example | | | Comp. Ex. |
|---|---|---|---|---|---|---|
| | | | 1 | 2 | 3 | 1 |
| Polymerizable composition | Catalyst solution | Compound of formula (15) [parts] | 5 | 5 | 4.95 | 2 |
| | | WOCl₄ [parts] | 0.42 | 0.15 | 0.5 | - |
| | | RIM-M [parts] | 45 | 45 | 44.55 | 100 |
| | | Viscosity [mPa·s] | 2900 | 34.6 | 3840 | - |
| | Storage time of catalyst solution | | 3 days | 3 days | 3 days | 3 days |
| | Gelation time [sec] | | 15 | 35 | 10 | 40 |
| | Curing time [sec] | | 70 | 85 | 65 | 100 |
| Evaluation | Mold releasability | | ○ | ○ | ○ | × |
| | Filling properties | | ○ | ○ | ○ | ○ |

As in apparent from the results shown in Table 1, its is confirmed that the use of a catalyst solution comprising MoOC1₄ and/or WOC1₄ in an amount of 0.5 to 20 parts by weight with respect to 100 parts by weight of the metal-oxo complex represented by the general formula (1) can provide a polymerizable composition having excellent mold releasability and filling properties.

## Claims

1. A catalyst solution comprising a metal-oxo complex represented by a general formula (1) below and at least one of MoOCl₄ and WOCl₄,
wherein a total content of MoOCl₄ and WOCl₄ is 0.5 to 20 parts by weight with respect to 100 parts by weight of the metal-oxo complex: 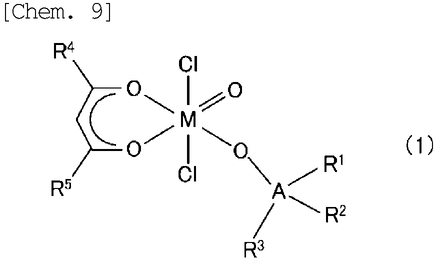
wherein in the above general formula (1), "M" represents a molybdenum atom or a tungsten atom; "A" represents a carbon atom, a silicon atom, a germanium atom, a tin atom or a lead atom; R¹ to R⁵ each independently represent a hydrogen atom, a straight or branched chain alkyl group that is substituted or unsubstituted and has 1 to 20 carbon atoms, or a substituted or unsubstituted aryl group having 6 to 20 carbon atoms; and R¹ to R³ may be bonded to one another to form a ring.

2. The catalyst solution according to claim 1, further comprising a norbornene-based monomer.

3. The catalyst solution according to claim 1 or 2, wherein in the general formula (1) above, "A" is a carbon atom or a silicon atom.

4. The catalyst solution according to any one of claims 1 to 3, wherein in the general formula (1) above, at least one of R⁴ and R⁵ is a methyl group or a t-butyl group.

5. The catalyst solution according to any one of claims 1 to 4, wherein in the general formula (1) above, R¹ and R² are each a straight or branched chain alkyl group that is substituted or unsubstituted and has 1 to 20 carbon atoms, and are bonded to one another to form a ring.

6. A method for producing the catalyst solution according to any one of claims 1 to 5, the method comprising:
a first step of reacting at least one of MoCl₆ and WCl₆ with a ketone compound in an aliphatic solvent to give a solution containing at least one of MoOCl₄ and WOCl₄,
a second step of reacting the solution containing at least one of MoOCl₄ and WOCl₄ obtained in the first step with a compound represented by a general formula (2) below to give a solution containing a compound represented by a general formula (3) below, and
a third step of reacting the solution containing the compound represented by the general formula (3) obtained in the second step with a compound represented by a general formula (4) below to give a catalyst solution comprising the metal-oxo complex represented by the general formula (1) above and at least one of MoOCl₄ and WOCl₄: 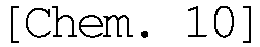 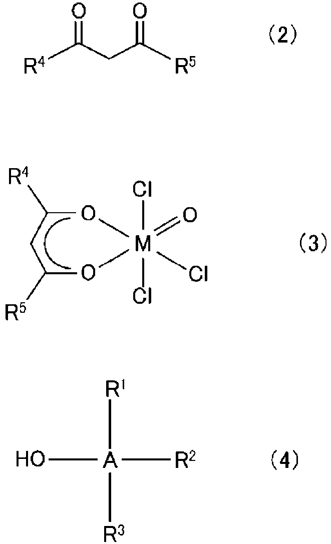 wherein in the general formulae (2) to (4), "A" represents a carbon atom, a silicon atom, a germanium atom, a tin atom or a lead atom; R¹ to R⁵ each independently represent a hydrogen atom, a straight or branched chain alkyl group that is substituted or unsubstituted and has 1 to 20 carbon atoms, or a substituted or unsubstituted aryl group having 6 to 20 carbon atoms; and R¹ to R³ may be bonded to one another to form a ring.
